# EUROPÄISCHE PATENTANMELDUNG

(11) **EP 0 743 129 A2**
(43) Veröffentlichungstag der Anmeldung: **20.11.1996**
(21) Anmeldenummer: 96107163.6
(22) Anmeldetag: 07.05.1996
(51) Int. Cl.: B23K 26/06

(54) **Verfahren zum Verbinden von Werkstücken**

(30) Priorität: 15.05.1995 CH 1408/95; 17.05.1995 CH 1450/95
(71) Anmelder: ELPATRONIC AG, CH-6303 Zug (CH)
(72) Erfinder: Aebersold, Hans, 8903 Birmensdorf (CH); Gross, Norbert, 8004 Zürich (CH); Urech, Werner, 8434 Kaiserstuhl (CH)

(57) **Zusammenfassung**

Bei einem Verfahren zum Verbinden von Werkstücken (1) durch Schweissen mittels einer Schweissenergiequelle (5) in einer Schweissstation (S) soll durch eine Schweissenergiequelle (4) eine Mehrzahl von Werkstücken (1.1 - 1.4) in einer Mehrzahl von Schweissstationen (S₁, S₂) nacheinander miteinander verbunden werden.

## Beschreibung

Die Erfindung betrifft ein Verfahren zum Verbinden von Werkstücken durch Schweissen mittels einer Schweissenergiequelle in einer Schweissstation, sowie eine Vorrichtung hierfür.

Zum Verbinden von Werkstücken, insbesondere bei der Herstellung von Karosserieteilen im Automobilbau, sind verschiedene Schweissverfahren bekannt. Zu erwähnen ist hier vor allem das Quetschnaht-Widerstandsrollenschweissen, Laserschweissen und dgl..

Wesentlich bei allen Schweissverfahren ist, dass der Schweissvorgang so wirtschaftlich wie möglich von statten gehen sollte. Dabei ist zu beachten, dass für den Schweissvorgang selbst eine bestimmte Zeit benötigt wird, da eine bestimmte Schweissgeschwindigkeit eingehalten werden muss. Diese liegt beim heutigen Stand der Technik bei unter 15 m/min.

Ferner ist es notwendig, die zu verbindenden Werkstücke vor dem Schweissvorgang zu positionieren, transportieren, auf Träger zu laden und von Trägern zu entladen, zu glätten, zu kühlen und eine Qualitätskontrolle durchzuführen. Diese Vorgänge nehmen erhebliche Zeit in Anspruch, die unproduktive Nebenzeiten sind, in denen nicht geschweisst werden kann.

Der vorliegenden Erfindung liegt die Aufgabe zugrunde, ein Verfahren und eine Vorrichtung der oben genannten Art zu entwickeln, mittels denen ein Verbinden von zwei Werkstücken auf wirtschaftlichere Weise möglich wird und die Produktivität einer Anlage durch Verringerung der Nebenzeiten gesteigert wird.

Zur Lösung dieser Aufgabe führt, dass durch eine gemeinsame Schweissenergiequelle eine Mehrzahl von Werkstücken in einer Mehrzahl von Schweissstationen nacheinander miteinander verbunden werden.

Das bedeutet, dass durch eine einzige Schweissenergiequelle, die in der Regel den aufwendigsten Teil der Vorrichtung darstellt, mehrere Schweissstationen bedient werden können. Dies wird als Duplexbetrieb bezeichnet, wobei Elemente, die bei einem Single-Betrieb Nebenzeiten verursachen, vervielfacht werden. Hierdurch erfolgt zum einen eine Kosteneinsparung, zum anderen ist es erfindungsgemäss möglich, solange ein Schweissvorgang in einer Schweissstation stattfindet, bereits verbundene Werkstücke aus der anderen Station zu entnehmen und diese andere Station mit neuen zu verbindenden Werkstücken zu beladen und diese Werkstücke zu positionieren. Es braucht dann lediglich die Schweissenergiequelle wiederum dieser neu bestückten Schweissstation zugeordnet zu werden. Hierdurch geht nur noch sehr wenig Zeit verloren.

In einem Ausführungsbeispiel des erfindungsgemässen Verfahren ist es möglich, die Werkstücke festzulegen und den Schweissstrahl, insbesondere Laserstrahl, beim Schweissen gegenüber den Werkstücken zu bewegen. Im anderen Ausführungsbeispiel soll dagegen die Schweissenergiequelle und der Laserstrahl beim Schweissen festliegen und die Werkstücke gegenüber dem Schweissstrahl bewegt werden. Es versteht sich von selbst, dass die Werkstücke beim Schweissvorgang festgelegt werden, was durch entsprechende Spanntische, Klemmelemente od.dgl. erfolgt. Es ist aber auch möglich, Rollendurchlaufbahnen mit Festlegeanordnungen zu verwenden.

Sofern als Schweissenergiequelle ein Laser verwendet wird, ergeben sich verbesserte Möglichkeiten durch die Einschaltung von Ablenkeinrichtungen in den Laserstrahl. Beim heutigen Stand der Lasertechnik bietet es sich an, dass der Laser ortsfest bleibt und einen Strahl immer in eine Richtung aussendet. In diesen Strahl können dann, je nach Wunsch bzw. Lage der Schweissstationen, die Ablenkeinrichtungen eingeschaltet werden, so dass der Strahl von der jeweiligen Ablenkeinrichtung zu einer Fokussiereinrichtung und zu der gewünschten Schweissstation gelenkt wird.

Sollen dagegen die Werkstücke beim Schweissvorgang ortsfest bleiben, so besteht auch die Möglichkeit, die Fokussiereinrichtungen zusammen mit den Ablenkeinrichtungen innerhalb der Schweissstationen zu bewegen. Als Ablenkeinrichtungen kommen in der Regel Spiegel aber auch Glasfaserkabel in Betracht.

Auch für die Anordnung der Schweissstationen gibt es eine Vielzahl von denkbaren Möglichkeiten. Sie können in Linie angeordnet sein, parallel zueinander liegen oder sandwichartig ausgerichtet sein. Dabei können die einzelnen Schweissstationen in einem beliebigen Winkel im Raum zueinander liegen.

Die Effizienz der vorliegenden Erfindung liegt einerseits in einer Verdoppelung der einfachen Komponenten, wodurch unproduktive Nebenzeiten für die teure Schweissenergiequelle minimiert werden. Die Schweissenergiequelle ist ständig ausgelastet, was besonders wesentlich ist: Bei einer nach dem Stand der Technik oder anderen Kriterien gegebenen Schweissgeschwindigkeit wird die maximale Produktionsmenge ermöglicht, welche durch den Einsatz einer Schweissenergiequelle realisierbar ist. Möglich ist auch die Versorgung von mehr als zwei Schweissstationen von einer Energiequelle aus.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht einer erfindungsgemässen Vorrichtung zum Verbinden von zwei Werkstücken;
Figur 2 eine Draufsicht auf die Vorrichtung gemäss Figur 1;
Figur 3 eine Draufsicht auf ein weiteres Ausführungsbeispiel einer erfindungsgemässen Vorrichtung;
Figur 4 bis 5 schematische Ansichten von weiteren Ausführungsbeispielen einer erfindungsgemässen Vorrichtung;
Figur 6 eine schematische Draufsicht auf einen Teil der Vorrichtung gemäss Figur 2.
Figur 7 ein Querschnitt durch eine erfindungsgemässe Vorrichtung, welche einen Shuttle zum Verschweissen von mehreren Blechpaaren verwendet.
Figur 8 eine Draufsicht auf die Vorrichtung von Figur 4.

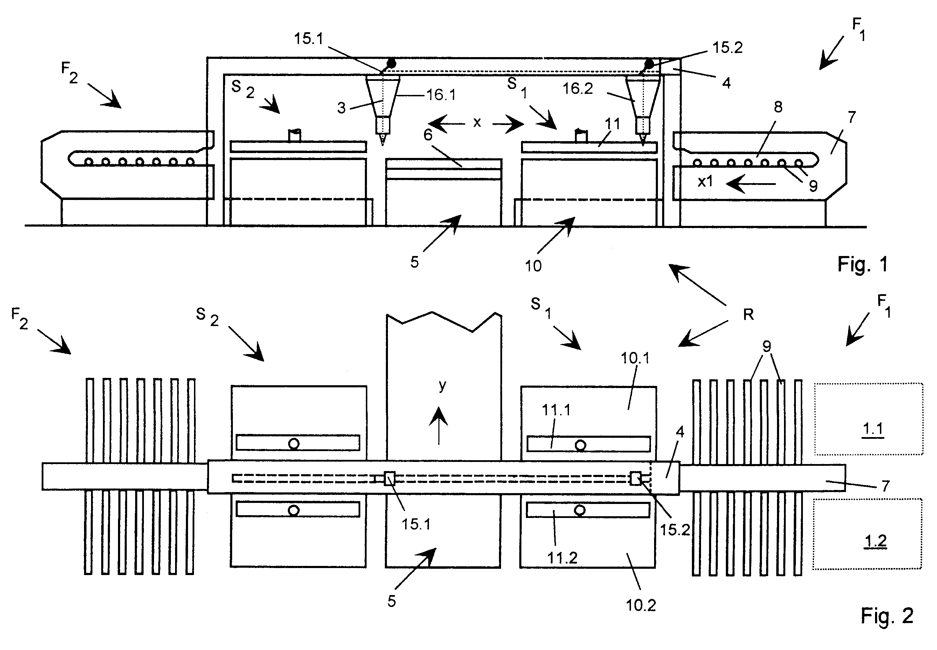

In einer erfindungsgemässen Vorrichtung R sollen zwei Werkstücke 1.1 und 1.2 (siehe Figur 2) durch Laserschweissen miteinander verbunden werden. Dabei weist die Vorrichtung R beidseits eines Portals 2 jeweils eine Zuführeinrichtung F₁ und F₂ und innerhalb des Portals jeweils eine Schweissstation S₁ und S₂ auf. Die Schweissungen selbst erfolgt mittels einem Laserstrahl 3, der von einem Laser 4 erzeugt wird.

Um den Laserstrahl 3 einmal der Schweissstation S₁ und zum anderen der Schweissstation S₂ zuordnen zu können, sind in den Laserstrahl 3 Ablenkeinrichtungen 15.1 und 15.2 vorgesehen, von denen der Laserstrahl 3 jeweils aus einer etwa waagrechten Strahlrichtung in eine senkrechte Strahlrichtung umgelenkt wird.

Dabei ist der Laser 4 orstfest beispielsweise im Eckbereich des Portals 2 angeordnet. Dieser Laser 4 sendet nur einen Laserstrahl in Richtung der Ablenkeinrichtungen 15.1 und 15.2. Den Ablenkeinrichtungen 15.1 und 15.2 sind Fokussiereinrichtungen 16.1 und 16.2 zugeordnet. Ist die Ablenkeinrichtung 15.2 in den Laserstrahl 3 eingeschaltet, so wird die Fokussiereinrichtung 16.2 bedient. Wird die Ablenkeinrichtung 15.2 weggeklappt, so kann der Laserstrahl 3 bis zur Ablenkeinrichtung 15.1 gelangen und wird dort in die Fokussiereinrichtung 16.1 abgelenkt. Beide Ablenkeinrichtungen 15.1 und 15.2 bewegen sich mit der jeweiligen Fokussiereinrichtung 16.1 und 16.2.

Zwischen den beiden Schweissstationen S₁ und S₂ ist eine Abtransporteinrichtung 5 vorgesehen, mittels der miteinander zu einer Platine verschweisste Werkstücke 1.1 und 1.2 in Richtung y abtransportiert werden. Beispielsweise kann die Abtransporteinrichtung 5 eine entsprechende Rollenbahn 6 aufweisen, wie dies in Figur 1 angedeutet ist.

Da die Zuführeinrichtungen F₁ und F₂ sowie die Schweissstation S₁ und S₂ identisch ausgebildet sind, wird nachfolgend nur ein Beispiel beschrieben.

Die Zuführeinrichtung F weist eine Spannzange 7 auf, die in Richtung x₁ verfahrbar angeordnet ist. Die Spannzange 7 besitzt einen Horizontalschlitz 8, an den sich beidseits Ablagerollen 9 anschliessen. Die Werkstücke 1.1 und 1.2 werden auf diese Ablagerollen 9 gelegt und durch ein beliebiges Fördermittel gegeneinander in den Horizontalschlitz 8 bewegt. In dem Horizontalschlitz 8 werden sie dann klemmend gehalten, wobei hierfür beliebige Klemmelemente vorgesehen sind.

Danach erfolgt ein Verfahren der Spannzange 7 in die Schweissstation S zwischen zwei Spanntische 10. Die Ablagerollen 9 verbleiben dabei in ihrer Position ausserhalb des Portals 2.

Die Spannzange 7 legt nun die Werkstücke 1.1 und 1.2 auf den Spanntischen 10 ab, wobei die Werkstücke 1.1 und 1.2 jeweils zwischen dem Spanntisch 10 und einer Druckplatte 11.1 und 11.2 gehalten werden. Jede Druckplatte 11 wird mit einem beliebigen, hydraulischen, pneumatischen oder mechanischen Druck beaufschlagt, so dass die Werkstücke 1.1 und 1.2 weitestmöglich fixiert sind.

Nunmehr wird der Druck auf die Werkstücke 1.1 und 1.2 im Horizontalschlitz 8 aufgehoben und die Spannzange 7 entgegen der Richtung x₁ aus der Schweissstation S bewegt. Dabei wird eine nicht näher gezeigte Stossfuge zwischen den beiden Werkstücken 1.1 und 1.2 freigegeben, entlang der jetzt der Laserstrahl 3 geführt wird, so dass eine Schweissnaht und damit eine Verbindung der beiden Werkstücke entsteht.

Während dem Schweissvorgang wird die Zuführeinrichtung F wieder mit Werkstücken beladen, die dann beim Einfahren der Zuführeinrichtung F in die Schweissstation S die miteinander verschweissten Werkstücke aus der Schweissstation S auf die Abtransporteinrichtung 5 ausschieben.

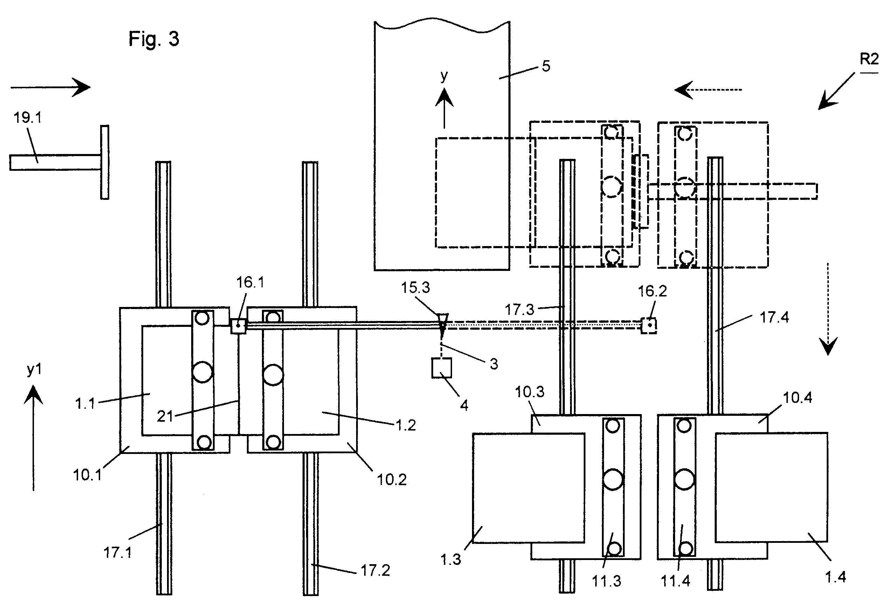

In einem weiteren Ausführungsbeispiel der Erfindung gemäss Figur 3 sind Spanntische 10.1, 10.2 und 10.3, 10.4 parallel laufend nebeneinander auf entsprechenden Schienen 17.1 bis 17.4 angeordnet. Bei diesem Ausführungsbeispiel sind die Spanntische 10.1 bis 10.4 bewegbar, während der Laser 4 feststehend ausgebildet ist. Der Laser könnte auch schwenkbar um einen bestimmten Winkel, im bevorzugten Ausführungsbeispiel um 180° um eine Drehachse angeordnet sein, so dass er sowohl die Spanntische 10.1, 10.2 als auch die Spanntische 10.3, 10.4 bedienen kann, allerdings ist dies mit den heutigen industrietauglichen Lasern infolge deren Grösse und Gewicht kaum möglich. Denkbar wäre auch die Möglichkeit, den Laser drehbar auszugestalten, so dass er jeweils links und rechts vorgesehene Ablenkeinrichtungen über den Spanntischen 10.1, 10.2 bzw. 10.3, 10.4 bedienen kann. Auch dieses Ausführungsbeispiel soll von der vorliegenden Erfindung umfasst sein, wenn es auch mit den heutigen Lasern noch nicht umgesetzt werden kann.

In Figur 3 wird gezeigt, dass der Laserstrahl 3 durch eine Ablenkeinrichtung 15.3 (Prismaspiegel) je nach Wunsch nach links oder nach rechts zur Fokussiereinrichtung 16.1 oder 16.2 umgelenkt werden kann. Die Fokussiereinrichtungen 16.1 und 16.2 lenken den Strahl 3 auf eine Stossfuge 21 zwischen den Werkstücken 1.1 und 1.2, die durch den Laserstrahl 3 zusammengeschweisst werden. Dabei bewegen sich die Spanntische 10.1 und 10.2 in Richtung y1, bis die beiden Werkstücke 1.1 und 1.2 miteinander verbunden sind. In dem Augenblick befinden sich die Spanntische in der Nähe einer Ausstosseinrichtung 19.1, welche beispielsweise als Industrieroboter ausgebildet ist. Dieser drückt, wie rechts oben gestrichelt angedeutet, auf die hintere Randkante der verschweissten Werkstücke und schiebt diese auf die Abtransporteinrichtung 5. Danach fahren die Spanntische 10.1 und 10.2, welche getriebemässig miteinander gekoppelt sind, zurück in eine Position, wie sie für die Spanntische 10.3 und 10.4 gezeigt ist. Hier befinden sich die Spanntische 10.3 und 10.4 in einer Beladeposition, wobei Werkstücke 1.3 und 1.4 seitlich auf die Spanntische 10.2 und 10.3 geschoben werden, so dass sie unter den Druckplatten 11.3 und 11.4 liegen. Hierbei kann eine Positionierung der beiden Werkstücke 1.3 und 1.4 und insbesondere eine randseitige Druckbeaufschlagung zur Schliessung einer Stossfuge erfolgen.

Während der Zeit des Beladens der Spanntische 10.3 und 10.4 hat der Laserstrahl 3 in der gezeigten Position die Werkstücke 1.1 und 1.2 miteinander verbunden. Nach Beendigung dieses Schweissvorganges wird der Laserstrahl 3 um bevorzugt 180° in die gestrichelt gezeigte Position umgelenkt, wobei bereits die Spanntische 10.3 und 10.4 in Richtung y₁ nach vorne gefahren sind, so dass der Laserstrahl 3 in dieser Position seinen Schweissvorgang fortsetzen kann. Nunmehr werden die Werkstücke 1.3 und 1.4 miteinander verschweisst, während die Spanntische 10.1 und 10.2 entladen und wieder neu beladen werden können. Sobald der Schweissvorgang für die Werkstücke 1.3 und 1.4 beendigt ist, befinden sich die Spanntische 10.1 und 10.2 mit neu beladenen Werkstücken bereits wieder in der in Figur 3 gezeigten Position, so dass der Laserstrahl 3 nach einem erneuten Umlenken um 180° seinen Schweissvorgang an den Spanntischen 10.1 und 10.2 fortsetzen kann.

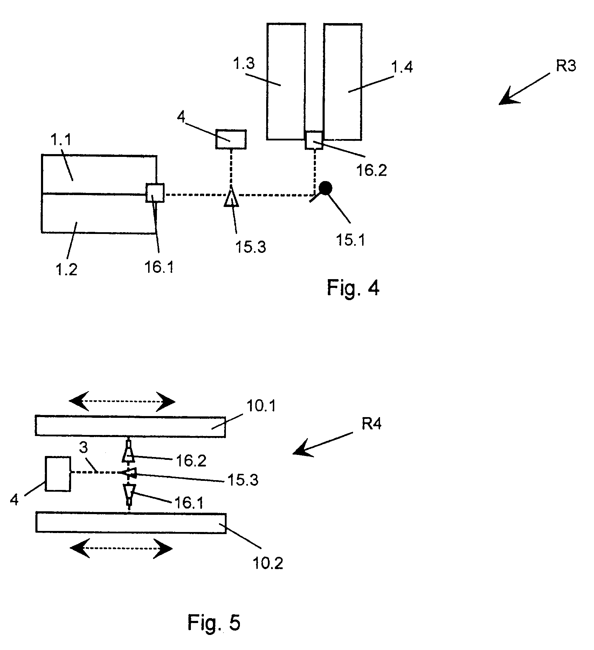

Die schematische Darstellung einer erfindungsgemässen Vorrichtung gemäss Figur 4 soll vor allem zeigen, dass der Standort des Lasers 4 völlig unabhängig von Lage und Anordnung der Schweissstation bzw. Werkstücke ist. In diesem Fall ist in den Laserstrahl zu einer Schweissstation noch eine zusätzliche Ablenkeinrichtung 15.1 eingeschaltet. Es versteht sich dabei von selbst, dass die Werkstücke auf entsprechenden Spanntischen festliegen.

Die Vorrichtung R4 gemäss Figur 5 unterscheidet sich von den Vorrichtungen gemäss den Figuren 1 bis 4 dadurch, dass eine sandwichartige Anordnung vorgenommen wird. Dabei befindet sich der Laser 4 zwischen Spanntischen 10.1 und 10.2, die waagrecht bewegt werden. Zum Schweissen der Werkstücke auf den Spanntischen 10.1 bzw. 10.2 wird der Laserstrahl 3 entsprechend abgelenkt.

Bei den gezeigten Ausführungsbeispielen gemäss den Figuren 3 und 5 ist es möglich, entweder die Spanntische gegenüber der Fokussiereinrichtungen oder die Fokussiereinrichtungen mit der Ablenkeinrichtung gegenüber den Spanntischen zu bewegen.

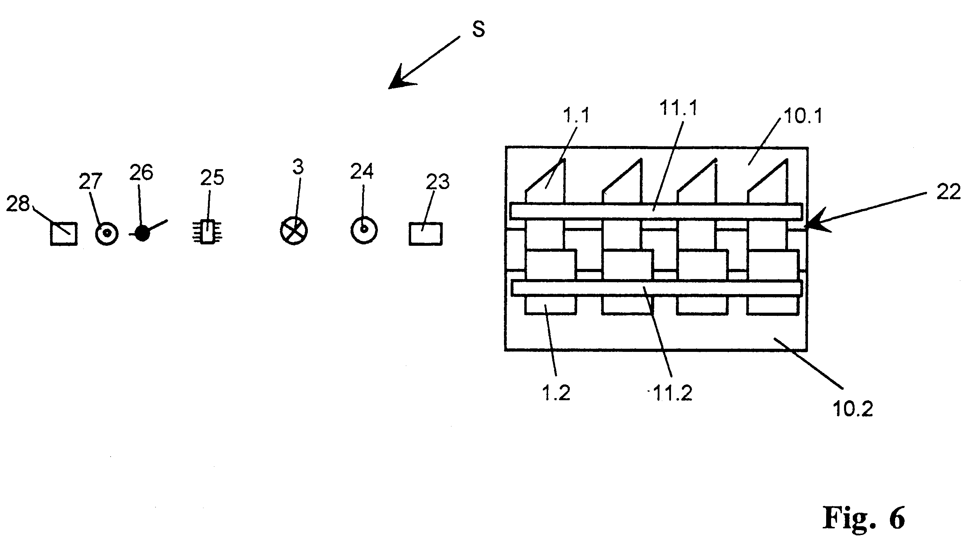

In Figur 6 sind die beiden Werkstücke 1.1 und 1.2 auf entsprechenden Spanntischen gezeigt, wobei diese Spanntische zusammen ein Shuttle 22 ausbilden, mit dem eine Mehrzahl von Werkstückpaaren durch eine Schweissstation S transportiert wird. Dies geschieht beispielsweise von einer Beladestation zu einer Entladestation. Dabei sind die Werkstücke über die Druckplatten 11.1 und 11.2 auf den Spanntischen 10.1 und 10.2 festgelegt.

In der Schweissstation S erfolgt als erstes ein Glätten der Werkstücke 1.1 und 1.2 im Bereich der Stossfuge, wie dies in der EP-A-0 565 846 beschrieben ist. Hierzu ist eine Glätteinrichtung 23 angedeutet.

Auf die Glätteinrichtung 23 erfolgt eine Überprüfung der Stossfuge durch einen Scout 24. Dabei wird vor allem der Verlauf der Stossfuge im Hinblick auf einen nachfolgenden Laserstrahl 3 überprüft.

Nach dem Schweissen hat es sich als ratsam erwiesen, wenn die Schweissnaht in einer Bürsteinrichtung 25 nachbehandelt wird. Danach erfolgt bevorzugt ein Ölen der Schweissnaht, wodurch die Schweissnaht unter anderem gekühlt wird. Dies geschieht in einer Kühleinrichtung 26. Darauf folgt eine Qualitätskontrolle 27 und ggfs. ein Nachglätten in einer Nachglätteinrichtung 28.

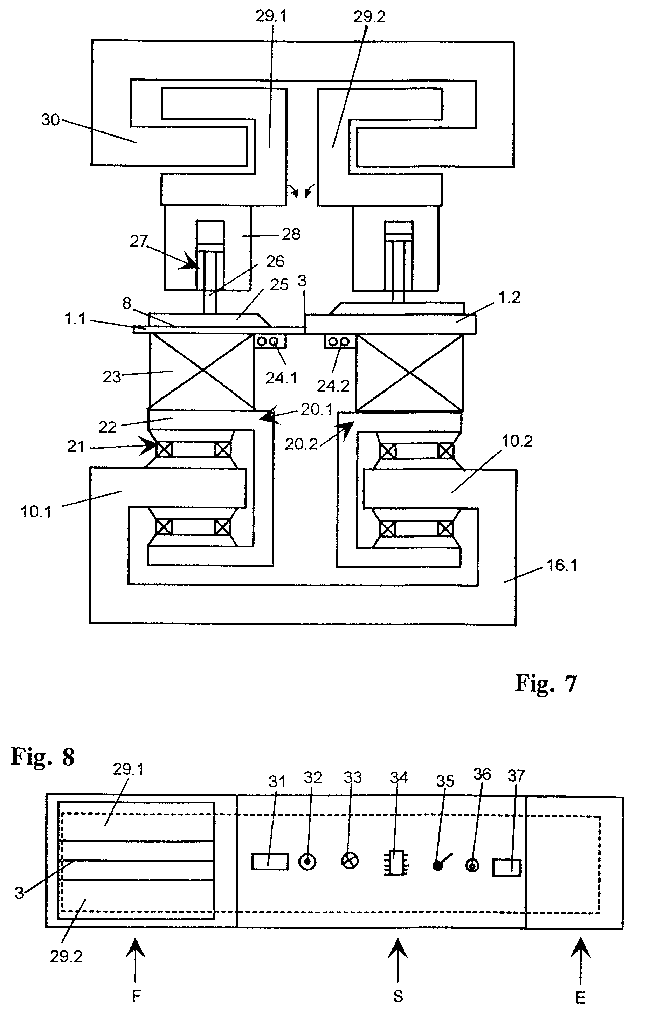

Diese in Fig. 6 schematisch angedeuteten Verhältnisse werden in Fig. 7 und 8 verdeutlicht:

Dargestellt in Figur 7 ist ein Querschnitt durch eine Maschine mit den in Fig. 6 dargestellten Funktionen.

Eine Draufsicht auf die Maschine von Fig. 7 zeigt Fig. 8.

Figur 7 zeigt einen Querschnitt durch eine Vorrichtung zur Ausführung der Erfindung. Dargestellt ist ein Maschinenrahmen 16.1,30, wobei beim Rahmenabschnitt 16.1 die Schenkel 10.1 und 10.2 speziell bezeichnet sind. Am Rahmen läuft ein Aufspanntisch oder Shuttle 20, welcher über C-förmige Elemente 20.1, 20.2, 29.1, 29.2 am Rahmen 16.1,30 abgestützt ist. Magnete 23 bilden die Auflagefläche für die Bleche 1.1 und 1.2. Ein Pressschuhe 25 vorzugsweise aus ferromagnetischem Material wird durch Druckelemente 27 gegen die Bleche 1.1, 1.2 vorgespannt. Die Wirkung der Pressung aufgrund der Druckelement 27 sowie des Magnets 23 ergänzt sich überproportional, was zur Folge hat, dass die Anordnung überproportional grössere Seitenkräfte aufnehmen kann. Die Kühlkanäle 24.1 und 24.2 unterstützen den Wärmeabtransport aufgrund der Schweissung in der Fuge 3.

Gemäss Figur 8 ist erkennbar, dass der Shuttle, von dem lediglich die beiden Bügel 29.1 und 29.2 erkennbar sind, durch die gesamte Vorrichtung läuft. Im Augenblick befindet er sich in einer Beladestation F, von dieser gelangt er in eine Schweissstation S und aus dieser in eine Entladestation E, aus der die zusammengeschweissten Werkstücke entnommen werden.

In der Schweisstation findet bevorzugt ein Glätten der Stossfuge durch eine Glätteinrichtung 31 statt, wie dies in der EP-A 565 846 beschrieben ist. Auf die Glätteinrichtung 31 folgt bevorzugt eine Spaltüberprüfung 32, mit welcher ein nachfolgender Laserstrahl 2 dem Spaltverlauf nachgeführt werden kann.

Nach dem Verschweissen der Stossfuge durch den Laser 33 wird bevorzugt die Schweissnaht in einer Bürsteinrichtung 34 nachbehandelt und in einer Kühlstation 35 geölt. Darauf folgt eine Qualitätskontrolle 36 und ggfs. ein Nachglätten 37.

Alle diese Behandlungen durchlaufen die Werkstücke 1.1 und 1.2 eingespannt in dem Shuttle.

## Patentansprüche

1. Verfahren zum Verbinden von Werkstücken (1) durch Schweissen mittels einer Schweissenergiequelle (5) in einer Schweissstation (S),
dadurch gekennzeichnet,
dass durch eine gemeinsame Schweissenergiequelle (4) eine Mehrzahl von Werkstücken (1.1 - 1.4) in einer Mehrzahl von Schweissstationen (S₁, S₂) nacheinander miteinander verbunden werden.

2. Verfahren nach Anspruch 1, dadurch gekennzeichnet, dass, in der betriebsfähig mit der Schweissenergiequelle verbundenen Schweissstation eine Schweissoperation stattfindet und, zur selben Zeit, in der mindestens einen anderen Schweissstation eine oder mehrere der Schweissoperation vor- oder nachgeschaltete Fügeoperationen ausgeführt werden, wie Beladen dieser anderen Schweissstation mit Werkstücken, Fixieren der Werkstücke im Hinblick auf die Schweissoperation, Kantenvorbereitung durch plastische Verformung, Bürsten und Oelen, und/oder Entladen der geschweissten Platinen von der Schweissstation.

3. Verfahren nach Anspruch 1, dadurch gekennzeichnet, dass als Schweisseinrichtung ein Laser (4) verwendet wird, der einen Laserstrahl (3) aussendet.

4. Verfahren nach Anspruch 3, dadurch gekennzeichnet, dass der Laserstrahl (3) zu den einzelnen Schweissstationen (S1, S2) durch Ablenkeinrichtungen (15) abgelenkt und in Fokussiereinrichtungen (16) gesammelt wird.

5. Verfahren nach Anspruch 4, dadurch gekennzeichnet, dass die Ablenkeinrichtungen (15.1, 15.2) in den Laserstrahl (3.1) eingeschwenkt werden, während der Laser (4) ortsfest bleibt.

6. Verfahren nach Anspruch 4 oder 5, dadurch gekennzeichnet, dass die Fokussiereinrichtungen (16) zusammen mit den Ablenkeinrichtungen (15.1, 15.2) in den Schweissstationen (S₁, S₂) bewegt werden, während die Werkstücke (1.1 - 1.4) festliegen.

7. Verfahren nach Anspruch 4 oder 5, dadurch gekennzeichnet, dass die Werkstücke (1.1 - 1.4) gegenüber ortsfesten Fokussiereinrichtungen (16) bewegt werden.

8. Vorrichtung zum Schweissen von Blechen zu Platinen und nach einem der Ansprüche 1 - 7 mit mindestens einer Schweissenergiequelle und mit mehreren wechselweise mit der Schweissenergiequelle betriebsfähig verbindbaren Schweissstationen, wobei die Anzahl der Schweissstationen grösser ist als die Anzahl der Schweissenergiequellen.

9. Vorrichtung nach Anspruch 8 dadurch gekennzeichnet, dass als Schweissenergiequelle ein Lasergerät und Umlenkeinrichtungen für dessen Laserstrahl vorgesehen sind, derart, dass der Laserstrahl zur Vornahme einer Schweissoperation wechselweise zu einer Laserschweissoptik einer jeweiligen Schweissstation lenkbar ist

10. Vorrichtung nach einem der Ansprüche 8 oder 9, dadurch gekennzeichnet, dass jede Schweissstation je Organe zum Fixieren der zu verschweissenden Bleche und Organe für eine Relativbewegung zwischen den zu verschweissenden Blechen und der Laserschweissoptik sowie vorzugsweise Organe zur Kantenvorbereitung der Bleche durch plastische Verformung aufweist.

11. Vorrichtung nach Anspruch 10, dadurch gekennzeichnet, dass das Organ für die Relativbewegung als Shuttle ausgebildet ist, welches die Organe zum Fixieren aufweist und zwischen einem Beladebereich und einem Entladebereich der Schweissstation hin und her verfahrbar ist, wobei die Laserschweissoptik stationär zwischen Belade- und Entladebereich angeordnet ist.

12. Vorrichtung nach Anspruch 10, dadurch gekennzeichnet, dass das Organ für die Relativbewegung als verfahrbare Laserschweissoptik ausgebildet ist, welche betriebsfähig über dem als Aufspanntisch ausgebildeten Organ zum Fixieren hin und her verfahrbar ist.

13. Vorrichtung nach Anspruch 10, dadurch gekennzeichnet, dass das Organ zum Fixieren der zu verschweissenden Bleche Festlegeelemente für mehrere Blechpaare aufweist, wobei die Festlegeelemente vorzugsweise Druckelemente und mit diesen zusammenwirkende Magnete aufweisen.
